# EUROPÄISCHE PATENTSCHRIFT

(11) **EP 1 105 279 B1**
(45) Veröffentlichungstag und Bekanntmachung des Hinweises auf die Patenterteilung: **02.01.2003**
(21) Anmeldenummer: 99931094.9
(22) Anmeldetag: 17.06.1999
(51) Int. Cl.: B29C 63/00, B29C 35/10

(54) **STRAHLUNGSQUELLE FÜR DIE BESTRAHLUNG VON INNENWÄNDEN LANGGESTRECKTER HOHLRÄUME**
RADIATION SOURCE FOR IRRADIATING THE INNER WALLS OF LONG HOLLOW CAVITIES
SOURCE DE RAYONNEMENT DESTINEE AU RAYONNEMENT DE PAROIS INTERNES DE LONGUES CAVITES

(30) Priorität: 18.07.1998 DE 29812835 U
(43) Veröffentlichungstag der Anmeldung: 13.06.2001
(73) Patentinhaber: UV RELINE.TEC GmbH & Co., 87437 Kempten (DE)
(72) Erfinder: REUTEMANN, Thomas, D-87527 Sonthofen (DE)
(74) Vertreter: Fischer, Wolf-Dieter, Dipl.-Ing.
(86) Internationale Anmeldenummer: EP9904211
(87) Internationale Veröffentlichungsnummer: WO00003863

(56) Entgegenhaltungen:
- EP-A- 0 122 246
- WO-A-92/16784
- CH-A- 676 493
- DE-C- 4 205 113
- DE-C- 4 206 035
- US-A- 3 123 101

## Beschreibung

Die Erfindung betrifft eine Strahlungsquelle mit Lampen für die Bestrahlung von Innenwänden langestreckter Hohlräume unter kontinuierlicher Bewegung der Strahlung längs der Achse des Hohlraumes, insbesondere für die Aushärtung strahlungshärtbarer Kunstharz-Laminate bei der Innensanierung von Rohren und Kanalisationsleitungen mittels UV-Strahlung, mit einem Fahrgestell, auf dessen Umfang mehrere Lampen angeordnet sind, wobei das Fahrgestell einen in Achsrichtung verlaufenden zentralen Träger aufweist, der mittels Führungsrädern an der Innenwand des Hohlraumes an Federbeinen abgestützt ist.

Eine Strahlungsquelle mit diesen Merkmalen ist bekannt (DE 4205113 C1), bei der an dem zentralen, in Axialrichtung verlaufenden Träger die Führungsräder an Lenkern verschwenkbar angeordnet sind, wobei senkrecht zu diesen Lenkern die Führungsräder an einem Federbein bzw. Stoßdämpfer am Träger abgestützt sind. Jeder Lampenebene ist ein Führungsrad zugeordnet.

Diese bekannte Ausführungsform weist den Nachteil auf, daß eine einfache Anpassung an unterschiedliche Hohlraumdurchmesser bzw. Rohrleitungsdurchmesser nicht möglich ist, es müssen vielmehr verschiedene Teile, nämlich die Stützrollen mit ihren Lagerböcken ausgetauscht und durch Fahrelemente, die einen größeren oder kleineren Radialabstand zwischen dem Träger und der Rohrleitung ermöglichen, ersetzt werden. Jeder Lampenebene ist nur ein Laufrad mit Stoßdämpfer zugeordnet, so daß Unebenheiten an den Innenwänden der Rohrleitung nicht ausgeglichen werden.

Der Erfindung liegt die Aufgabe zugrunde, eine Strahlungsquelle der eingangs genannten Art so auszubilden, daß eine Anpassung der Vorrichtung an unterschiedliche Rohrleitungsdurchmesser ohne Austausch von Bauteilen durch einen einfachen Einstellvorgang bewirkt wird.

Diese Aufgabe wird nach der Erfindung dadurch gelöst, daß das Fahrgestell eine axiale zentral angeordnete Gewindespindel aufweist, und daß die Führungsräder mit einer Lampe und Temperatursensoren an einem Fahrgestellrahmen angebracht sind, wobei das eine Ende des Federbeines am Führungsrad und das andere Ende an einem auf der Gewindespindel laufenden Aufnahmeblock gelenkig befestigt ist.

Vorteilhafte Ausgestaltungen der Erfindungen ergeben sich aus den Unteransprüchen.

Die Erfindung bringt insbesondere den Vorteil einer variablen Anpassung der Lampen und Radabstände zur Innenwand des zu härtenden Kunstharz-Laminats über einen zentralen manuell oder elektrisch bedienbaren Gewindespindeltrieb. Bei Verwendung von zwei Führungsrädern in einer Lampenebene lassen sich Unebenheiten der Laminatoberfläche gut ausgleichen. Damit ist auch jede Lampe an den Laminatabstand gebunden. Es lassen sich vorteilhaft auch zwei oder mehrere gleichgebaute Fahrgestell-Einheiten bzw. Lampen pro Einheit hintereinander anordnen. Jede Einheit umfaßt mehrere, beispielsweise sechs Fahrgestellrahmen mit je einer Lampe oder zwei Lampen, die in Axialrichtung gegeneinander versetzt, vorzugsweise aber auf gleicher Höhe angeordnet sind.

Durch die erfindungsgemäße Ausführung der Strahlungsquelle ist es möglich, mit einer Vorrichtung ohne aufwendige Manipulationen Rohrleitungen verschiedener Nennweiten, z. B. von 200 bis 800 mm, insbesondere 300 bis 550 mm zu sanieren.

Bei der Anordnung von zwei oder mehr Einheiten bzw. Lampen pro Einheit hintereinander wird die in Zugrichtung vorn sitzende Einheit mit einer montierten variablen Anzahl von UVA-Lampen mit geringerer elektrischer Leistung als ihre Nennlast gefahren. Eine Verschiebung des Spektrums durch die Leistungsreduzierung ist nicht existent. Dies hat insbesondere den Vorteil, daß die Polimerisation des Harzes und somit die Verkettung der freien Moleküle etwas langsamer voran geht und erst die zweite direkt nachfolgende Einheit die volle Leistung auf das Laminat abstrahlt.

Die Erfindung wird in der nachfolgenden Beschreibung anhand eines in der Zeichnung dargestellten Ausführungsbeispiels näher erläutert.

Es zeigen,
- Fig. 1: einen Längsschnitt der Strahlungsquelle, mit einer Einheit mit einer Lampe pro Träger,
- Fig. 2: eine Seitenansicht von Fig. 1 und
- Fig. 3: einen Längsschnitt der Strahlungsquelle gemäß einer weiteren Ausführungsform, mit einer Einheit mit zwei Lampen pro Träger.

Die in der Zeichnung dargestellte Strahlungsquelle dient insbesondere zur Innensanierung von Rohr- und Kanalisationsleitungen und ist mit UV-Lampen 3 bestückt. In der Zeichnung wird die Rohrleitung als Hohlraum 1 bezeichnet, dessen Innenwand 2 durch Härten eines dort angelegten, harzgetränkten Faserschlauches saniert werden soll.

Mit der Längsachse 4 des Hohlraumes 1 fällt eine Gewindespindel 8 zusammen, die zu beiden Seiten in Lagerböcken 13 bzw. 14 gelagert ist. Die zentrierende Abstützung der Gewindespindel 8 erfolgt mit Hilfe von einzelnen Fahrgestellrahmen 10, die sich parallel zur Achse 4 erstrecken. Diese Fahrgestellrahmen 10 tragen zu beiden Seiten Böcke 15, an denen Federbeine bzw. Stoßdämpfer 7 gelenkig befestigt sind. Das andere Ende dieser Stoßdämpfer 7 ist jeweils an einem Aufnahmeblock 11 gelenkig angeordnet, der auf der Gewindespindel 8 angebracht ist und durch Drehen der Gewindespindel 8 senkrecht zur Längsachse verschoben werden kann. Der Stoßdämpfer 7 schließt mit der Gewindespindel in jeder Position einen spitzen Winkel ein, wobei zwei benachbarte Stoßdämpfer 7 voneinander weg nach außen gerichtet sind.

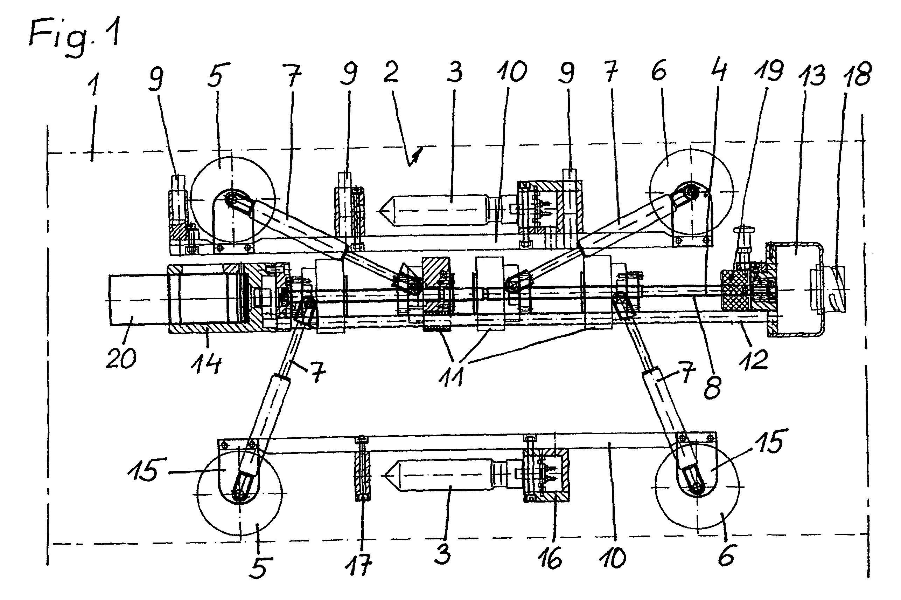

Jeder Fahrgestellrahmen 10 weist zwischen den zwei Führungsrädern 5 bzw. 6 eine UVA-Lampe 3 auf, die in einer Fassung 16 angeordnet ist und eine Gegenhalterung 17 aufweist. Die in Fig. 1 dargestellten Lampen 3 können nicht nur in reiner Längsrichtung axial zum Rohrverlauf montiert werden, sondern auch in einem bis zu 45° Winkel zur Axialrichtung. Dies bringt eine verbesserte Ausnutzung der strahlenden Fläche der Lampe. Außerdem sind an dem Fahrgestellrahmen 10, soweit dies für die Steuerung der Geschwindigkeit, mit der die Strahlungsquelle durch die Rohrleitung gezogen wird, erforderlich ist, Temperatursensoren 9 angeordnet. Die einzelnen Stoßdämpfer 7 erstrecken sich radial innerhalb des Hohlraumes 1 bzw. der zu sanierenden Rohrleitung. Für das Verschwenken des Fahrgestellrahmens 10 reicht in der Regel ein Stoßdämpfer 7 je Führungsrad 5 bzw. 6 aus, doch können solche Stoßdämpfer 7 auch zu beiden Seiten des Führungsrades angeordnet sein.

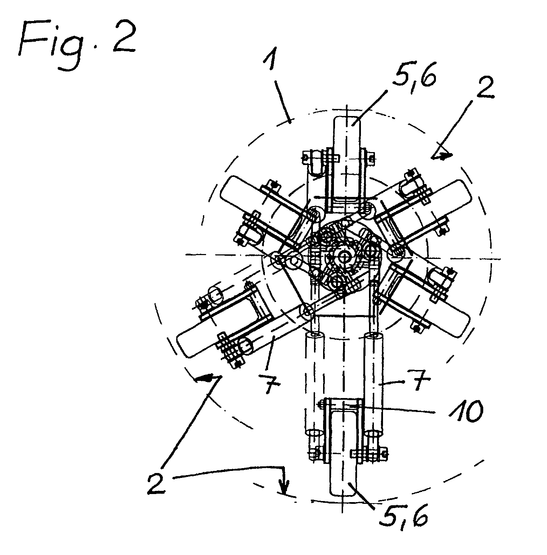

Wie die Fig. 2 zeigt, sind auf einer Fahrgestelleinheit sechs solcher Fahrgestellrahmen vorgesehen, wobei jedoch auch entsprechend dem Rohrdurchmesser vier oder auch acht Rahmen vorgesehen sein können. Die einzelnen Lampen 3 befinden sich bei jedem Fahrgestellrahmen 10 zwischen den seitlich angeordneten Stoßdämpfern 7.

In Fig. 1 sind zwei Positionen der Stoßdämpfer 7 dargestellt, und zwar in der oberen Hälfte der Zeichnung für einen geringeren Durchmesser, und für einen größeren Durchmesser gemäß der unteren Hälfte der Zeichnung. Die Gewindespindel 8 besitzt, ausgehend von ihrer Mitte, ein gegenläufiges Gewinde, so daß sich die jeweiligen Aufnahmeblökke 11 beim Drehen der Gewindespindel 8 entgegengesetzt verschieben. Zur Führung der Aufnahmeblöcke 11 dient eine axiale Welle 12, die parallel zur Gewindespindel 8 verläuft und an den Lagerböcken 13, 14 gehaltert ist. Das Drehen der Gewindespindel 8 kann mit Hilfe einer Rändelmutter 19 erfolgen, jedoch kann der Antrieb auch mit Hilfe eines Elektromotors erfolgen. An dem einen Lagerbock 13 befindet sich eine Anschlußbuchse 18 für die Elektronik, und an der gegenüberliegenden Seite, dem Lagerbock 14, kann eine Kamera 20 angeordnet werden.

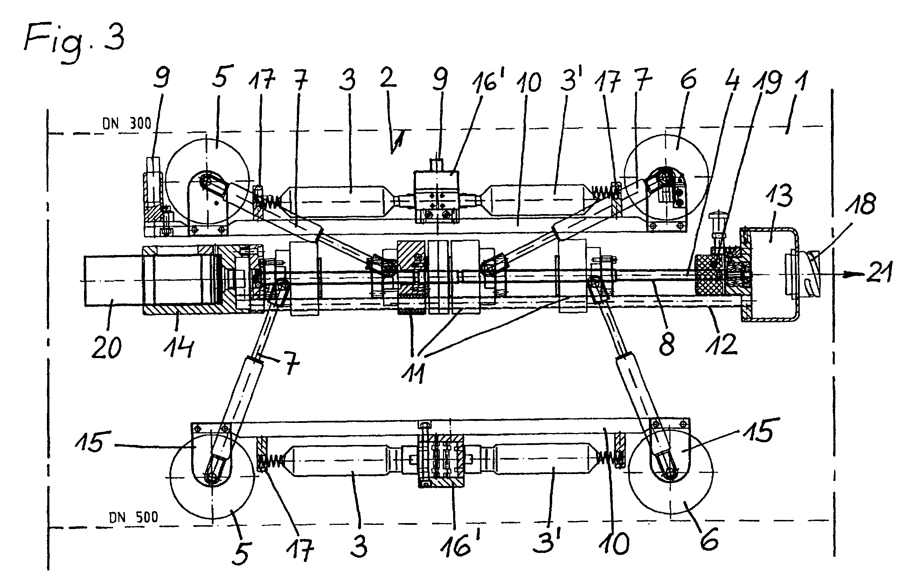

Bei der in Figur 3 gezeigten Ausführungsform der Strahlungsquelle ist jeder Fahrgestellrahmen 10 mit einer weiteren Lampe 3' versehen, so daß sich zwischen zwei Führungsrädern 5,6 aneinandergereiht zwei solcher Lampen 3 bzw. 3' befinden. Jede Lampe 3, 3' besitzt eine Gegenhalterung 17. Außerdem besitzen die Lampen 3,3' eine gemeinsame Fassung 16' und weisen von dieser zentralen Fassung 16' in die entgegengesetzte Richtung. Dies bietet insbesondere den Vorteil, daß die in Zugrichtung 21 vorne befindliche Lampe 3' mit einer anderen Intensität bzw. einem anderen Spektrum betrieben werden kann als die nachfolgende Lampe 3, um die Polymerisation zu verbessern.

## Patentansprüche

1. Strahlungsquelle mit Lampen (3) für die Bestrahlung von Innenwänden (2) langgestreckter Hohlräume (1) unter kontinuierlicher Bewegung der Strahlung längs der Achse (4) des Hohlraumes (1), insbesondere für die Aushärtung strahlungshärtbarer Kunstharz-Laminate bei der Innensanierung von Rohren und Kanalisationsleitungen mittels UV-Strahlung, mit einem Fahrgestell, auf dessen Umfang mehrere Lampen (3) angeordnet sind, wobei das Fahrgestell einen in Achsrichtung verlaufenden zentralen Träger aufweist, der mittels Führungsrädern (5, 6) an der Innenwand (2) des Hohlraumes (1) an Federbeinen (7) abgestützt ist, **dadurch gekennzeichnet, daß** das Fahrgestell eine axiale zentral angeordnete Gewindespindel (8) aufweist, und daß die Führungsräder (5, 6) mit einer Lampe (3) und Temperatursensoren (9) an einem Fahrgestellrahmen (10) angebracht sind, wobei das eine Ende des Federbeines (7) am Führungsrad (5, 6) und das andere Ende an einem auf der Gewindespindel (8) laufenden Aufnahmeblock (11) gelenkig befestigt ist.

2. Strahlungsquelle nach Anspruch 1, **dadurch gekennzeichnet, daß** eine Anzahl von Fahrgestellrahmen (10) mit Führungsrädern (5, 6) radial zur Gewindespindel (8) angeordnet sind.

3. Strahlungsquelle nach Anspruch 1 und 2, **dadurch gekennzeichnet, daß** jeder Fahrgestellrahmen (10) zwei an Federbeinen (7) abgestützte Führungsräder (5, 6) aufweist.

4. Strahlungsquelle nach Anspruch 1 bis 3, **dadurch gekennzeichnet, daß** parallel zur Gewindespindel (8) eine Führungswelle (12) angeordnet ist, auf der die Aufnahmeblöcke (11) geführt sind.

5. Strahlungsquelle nach Anspruch 1 bis 4, **dadurch gekennzeichnet, daß** jeder Fahrgestellrahmen (10) eine weitere Lampe (3') aufweist.

6. Strahlungsquelle nach Anspruch 5, **dadurch gekennzeichnet, daß** die weitere Lampe (3') an einer gemeinsamen Fassung (16') mit der ersten Lampe (3) angeordnet ist.

7. Strahlungsquelle nach einem der Ansprüche 1 bis 6, **dadurch gekennzeichnet, daß** die Lampen (3, 3') in axialer Richtung zwischen zwei Führungsrädern (5,6), sowie zwischen zwei Stoßdämpfern (7) eines Führungsrades (5 bzw. 6) jedes Fahrgestellrahmens (10) angeordnet sind.

## Claims

1. Radiation source with lamps (3) for irradiating internal walls (2) of long cavities (1) with continuous movement of the radiation along the axis (4) of the cavity (1), in particular for curing synthetic resin laminates which are curable by radiation during the internal restoration of pipes and sewage lines by means of UV radiation, with a carriage, on the periphery of which a plurality of lamps (3) are arranged, the carriage having a central carrier extending in the axial direction which is supported on suspension struts (7) by means of guide wheels (5, 6) on the internal wall (2) of the cavity (1), **characterised in that** the carriage has an axially centrally arranged threaded spindle (8) and **in that** the guide wheels (5, 6) with a lamp (3) and temperature sensors (9) are attached to a carriage frame (10), one end of the suspension strut (7) being articulated to the guide wheel (5, 6) and the other end to a receiving block extending on the threaded spindle (8).

2. Radiation source according to claim 1, **characterised in that** a number of carriage frames (10) with guide wheels (5, 6) are arranged radially to the threaded spindle (8).

3. Radiation source according to claim 1 and 2, **characterised in that** each carriage frame (10) has two guide wheels (5, 6) supported on suspension struts (7).

4. Radiation source according to claim 1 to 3, **characterised in that** arranged parallel to the threaded spindle (8) is a guide shaft (12) on which the receiving blocks (11) are guided.

5. Radiation source according to claim 1 to 4, **characterised in that** each carriage frame (10) has a further lamp (3').

6. Radiation source according to claim 5, **characterised in that** the further lamp (3') is arranged on a common holder (16') with the first lamp (3).

7. Radiation source according to any one of claims 1 to 6, **characterised in that** the lamps (3, 3') are arranged between two guide wheels (5, 6) in the axial direction, and between two shock absorbers (7) of a guide wheel (5 and 6) of each carriage frame (10).

## Revendications

1. Source de rayonnement comportant des lampes (3) pour l'irradiation de parois intérieures (2) d'espaces creux allongés (1) avec déplacement continuel du rayonnement le long de l'axe (4) de l'espace creux (1), en particulier pour le durcissement de laminés en résine synthétique durcissables par rayonnement lors de la rénovation intérieure de tuyauteries et canalisations par rayonnement UV, comportant un chariot, sur le pourtour duquel sont disposées plusieurs lampes (3), le chariot présentant un support central qui s'étend dans la direction axiale et s'appuie au moyen de roues de guidage (5, 6) sur la paroi intérieure (2) de l'espace creux (1) sur des jambes de force à ressort (7), **caractérisée en ce que** le chariot présente une broche filetée (8) axiale disposée de façon centrale, et que les roues de guidage (5, 6) sont montées avec une lampe (3) et des capteurs de température (9) sur un cadre de chariot (10), l'une des extrémités de la jambe de force à ressort (7) étant fixée avec articulation sur la roue de guidage (5, 6), et l'autre extrémité sur un bloc de réception (11) qui passe sur la broche filetée (8).

2. Source de rayonnement suivant la revendication 1, **caractérisée en ce qu'**un nombre de cadres de chariot (10) munis de roues de guidage (5, 6) sont disposés radialement par rapport à la broche filetée (8).

3. Source de rayonnement suivant les revendications 1 et 2, **caractérisée en ce que** chaque cadre de chariot (10) présente deux roues de guidage (5, 6) appuyées sur des jambes de force à ressort (7).

4. Source de rayonnement suivant les revendications 1 à 3, **caractérisée en ce qu'**un arbre de guidage (12) sur lequel sont guidés les blocs de réception (11) est disposé parallèlement à la broche filetée (8).

5. Source de rayonnement suivant les revendications 1 à 4, **caractérisée en ce que** chaque cadre de chariot (10) présente une lampe supplémentaire (3').

6. Source de rayonnement suivant la revendication 5, **caractérisée en ce que** la lampe supplémentaire (3') est disposée sur une douille commune (16') avec la première lampe (3).

7. Source de rayonnement suivant l'une des revendications 1 à 6, **caractérisée en ce que** les lampes (3, 3') sont disposées dans la direction axiale entre deux roues de guidage (5, 6), ainsi qu'entre deux amortisseurs de chocs (7) d'une roue de guidage (5 ou 6) de chaque cadre de chariot (10).
